# EUROPÄISCHE PATENTSCHRIFT

(11) **EP 2 930 603 B1**
(45) Veröffentlichungstag und Bekanntmachung des Hinweises auf die Patenterteilung: **10.10.2018**
(21) Anmeldenummer: 14163689.4
(22) Anmeldetag: 07.04.2014
(51) Int. Cl.: G06F 3/0488, G06F 3/0482, B60K 35/00, B60K 37/06

(54) **Verfahren und Vorrichtung zum Bereitstellen einer graphischen Benutzerschnittstelle in einem Fahrzeug**
Method and device for providing a graphical user interface in a vehicle
Procédé et dispositif de préparation d'une interface utilisateur graphique dans un véhicule

(43) Veröffentlichungstag der Anmeldung: 14.10.2015
(73) Patentinhaber: Volkswagen Aktiengesellschaft, 38440 Wolfsburg (DE)
(72) Erfinder: Kuhn, Mathias, 14129 Berlin (DE); Kögler, Indra-Lena, 10829 Berlin (DE); Budzynski, Tobias, 13187 Berlin (DE); Hahn, Alexander, 38104 Braunschweig (DE); Lou, Jian, 10707 Berlin (DE)

(56) Entgegenhaltungen:
- EP-A1- 2 246 214
- DE-A1-102006 037 156
- DE-U1-202013 000 751

## Beschreibung

Die vorliegende Erfindung betrifft ein Verfahren und eine Vorrichtung zum Bereitstellen einer graphischen Benutzerschnittstelle in einem Fahrzeug.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Die DE 10 2009 057 082 A1 beschreibt ein Verfahren zum Anzeigen von Widget-Objekten auf einer Anzeigefläche, bei dem zumindest ein Widget-Objekt mehrere Darstellungszustände einnehmen kann. Die Darstellungszustände unterschieden sich dabei hinsichtlich der Größe des Widget-Objekts auf der Anzeigefläche.

Die DE 10 2008 048 825 A1 beschreibt ein Verfahren zum Betreiben einer Anzeige- und Bedienvorrichtung in einem Kraftfahrzeug mit nutzerbeeinflussbarer Darstellung von Anzeigeobjekten. Dabei ist über eine Nutzereingabe ein Modifiziermodus aktivierbar, in dem eine graphische Darstellung aller Anzeigeobjekte zumindest teilweise in einem Teilbereich der Anzeigefläche erfolgt.

Die DE 20 2013 000 751 U1 beschreibt eine Vorrichtung zum Anzeigen einer Vielzahl von flächigen, in mindestens einem Stapel angeordneten Objekten. Dabei wechselt der Stapel von einem ersten zu einem zweiten Anzeigezustand, wenn ein Betätigungselement in einem Annäherungsbereich vor der Anzeigefläche erfasst wird. Insbesondere werden dabei die Elemente des Stapels "aufgefächert" und in einem bestimmten Abstand hintereinander angezeigt. Bei einer Berührung der Anzeigefläche geht die Darstellung in einen dritten Anzeigezustand über, wobei die Elemente in noch größerem Abstand hintereinander oder seitlich versetzt angezeigt werden.

Es ist Aufgabe der vorliegenden Erfindung, ein Verfahren und eine Vorrichtung bereitzustellen, welche eine einfache und intuitive Aufnahme von Informationen von einer graphischen Benutzerschnittstelle und eine einfache und intuitive Bedienung einer graphischen Benutzerschnittstelle ermöglichen.

Diese Aufgabe wird durch ein Verfahren nach Anspruch 1 und eine Vorrichtung nach Anspruch 8 gelöst. Vorteilhafte Ausgestaltungen und Weiterbildungen sind Gegenstände der abhängigen Ansprüche.

Bei dem erfindungsgemäßen Verfahren wird auf einer Anzeigefläche einer Anzeigevorrichtung eine Anzeige angezeigt, bei der zumindest zwei Anzeigefenster in einem ersten Anzeigezustand angezeigt werden, wobei in den Anzeigefenstern graphische Objekte angezeigt werden. Dabei sind die graphischen Objekte für jedes Anzeigefenster einer Kategorie zugeordnet. Weiterhin wird eine Bedienabsicht eines Nutzers für ein erstes der zumindest zwei Anzeigefenster erfasst. Wenn die Bedienabsicht erfasst worden ist, wechselt das erste Anzeigefenster in einen Bedienzustand. Weiterhin wird, wenn sich das erste Anzeigefenster im Bedienzustand befindet, eine Bedienaktion des Nutzers erfasst. Wenn die Bedienaktion erfasst worden ist, wechselt zumindest das erste Anzeigefenster in einen zweiten Anzeigezustand. Dies ermöglicht eine einfache und intuitive Bedienung und Anzeige auf einer Anzeigefläche in einem Fahrzeug. Dies ist insbesondere für den Fahrer des Fahrzeugs wichtig, da er so wenig wie möglich vom Verkehrsgeschehen abgelenkt werden soll.

Insbesondere wird erfasst, ob das Fahrzeug gestartet wird. Wenn erfasst worden ist, dass das Fahrzeug gestartet wurde, wird die Anzeige automatisch angezeigt. Bei der Anzeige handelt es sich also insbesondere um eine Startbildanzeige. Die Startbildanzeige erscheint immer dann, wenn das Fahrzeug gestartet wird. Die Startbildanzeige kann insbesondere vom Nutzer selbst nach seinen Vorlieben konfiguriert werden. Dabei können die graphischen Objekte, die beispielsweise unterschiedliche Menüpunkte in einem Bedienmenü oder aber auch unterschiedliche Fahrzeugfunktionen repräsentieren können, nach Kategorie zusammengefasst werden. Dabei kann der Nutzer selbst entscheiden, welche Funktion oder welche Information zu welcher Kategorie gehört. Dadurch kann sich der Nutzer ein Bedienmenü bzw. eine Anzeige zusammenstellen, die er selbst einfach und schnell überblicken kann.

Zu der Startbildanzeige kann insbesondere durch das Betätigen eines sogenannten Home-Buttons von jeder beliebigen Anzeige zurückgekehrt werden.

Insbesondere wird das erste Anzeigefenster im ersten Anzeigezustand in einer gleichen Größe und/oder Farbe dargestellt wie ein zweites der zwei Anzeigefenster. Im Bedienzustand wird das erste Anzeigefenster im Vergleich zum zweiten Anzeigefenster hervorgehoben dargestellt.

Dadurch wird dem Nutzer das Anzeigefenster angezeigt, auf welches sich seine Bedienabsicht richtet. Der Nutzer kann also einschätzen, ob seine Bedienabsicht eindeutig erfasst worden ist. Bei Bedarf kann der Nutzer dann sein Bedienabsicht noch korrigieren.

In einer Ausgestaltung weisen die Anzeigefenster eine Umrandung auf. Im Bedienzustand wird das erste Anzeigefenster dadurch hervorgehoben dargestellt, dass für die Umrandung des ersten Anzeigefensters eine andere Farbe und/oder eine andere Dicke als für die Umrandung des zweiten Anzeigefensters auf der Anzeigefläche erzeugt wird. Diese Varianten stellen eine einfache, aber effektive Art dar, ein Anzeigefenster hervorzuheben.

Insbesondere wird das erste Anzeigefenster im Bedienzustand dadurch hervorgehoben dargestellt, dass es im Vergleich zum zweiten Anzeigefenster vergrößert und/oder in einer anderen Farbe dargestellt wird. Insbesondere können auch die graphischen Objekte im Bedienzustand des ersten Anzeigefenster vergrößert dargestellt werden. Dadurch kann der Nutzer, bereits bevor er die Bedienaktion ausführt, besser entscheiden, ob er tatsächlich Zugang zu den im ersten Anzeigefenster angezeigten graphischen Objekten wünscht.

Insbesondere kann das erste Anzeigefenster in dem zweiten Anzeigezustand vergrößert dargestellt werden, wobei auch die graphischen Objekte in dem ersten Anzeigefenster vergrößert dargestellt werden. Das zweite Anzeigefenster kann dann von dem ersten Anzeigefenster im zweiten Anzeigezustand zumindest teilweise überdeckt werden oder das zweite Anzeigefenster verkleinert dargestellt wird. Es wechselt also auch das zweite Anzeigefenster in einen zweiten Anzeigezustand. Dadurch wird dem Nutzer der Inhalt des Anzeigefensters auf deutliche Art und Weise dargestellt, so dass ihm ein besserer, schnellerer und intuitiverer Zugang zu den graphischen Objekten ermöglicht wird.

In einer anderen Ausgestaltung wird das zweite Anzeigefenster nicht mehr angezeigt, wenn sich das erste Anzeigefenster im zweiten Anzeigezustand befindet. Vom ersten Anzeigefenster werden im zweiten Anzeigezustand nur noch die graphischen Objekte angezeigt. Dadurch kann sich der Nutzer auf die von ihm ausgewählte Kategorie beschränken. Auch diese Ausgestaltung vereinfacht die Anzeige auf der Anzeigefläche, so dass der Nutzer, der beispielsweise der Fahrer des Fahrzeugs ist, bei der Bedienung nur wenig Aufmerksamkeit auf die Anzeigefläche richten muss.

Die Kategorien, welchen die graphischen Objekte in dem ersten bzw. zweiten Fenster zugeordnet sind, Navigationsinformationen, Kommunikationsinformationen, Klimainformationen, Medienwiedergabeinformationen und/oder Wetterinformationen umfassen. Die Klimainformationen können dabei insbesondere Informationen zu Einstellungen der Klimafunktion des Fahrzeugs betreffen. Die Kommunikationsinformationen können insbesondere Informationen zu einer Telefonfunktion umfassen. Dabei ist diese entweder Teil des Fahrzeugs, oder wird über ein extern mit dem Fahrzeug gekoppeltes Mobiltelefon bereitgestellt.

Bevorzugt umfassen die Anzeigefenster und/oder die graphischen Objekte Widget-Objekte. Unter einem *Widget-Objekt* wird im Sinne der Erfindung ein Objekt verstanden, welches graphisch auf der Anzeigefläche dargestellt wird und welches einer Anwendung zugeordnet ist, die z. B. von einer Fahrzeugeinrichtung ausgeführt wird. Ein Widget-Objekt kann insbesondere in einem kleinen Bereich der Anzeigefläche Informationen einer Fahrzeugeinrichtung anzeigen, die laufend aktualisiert werden. Beispielsweise können von dem Widget-Objekt Routeninformationen des Navigationssystems, aktuelle Meldungen zum Wetter, zum Straßenzustand und zum Verkehrszustand angezeigt werden sowie Informationen zu Multimedia-Einrichtungen des Fahrzeugs. Die Widget-Objekte werden insbesondere unabhängig vom weiteren Anzeigeinhalt der Anzeigefläche dargestellt. Ist das Anzeigefenster ein Widget-Objekt, können auch die graphischen Objekte in dem Anzeigefenster Widget-Objekte sein. Dabei hat der Nutzer über das Anzeigefenster Zugang zu anderen Widget-Objekten.

Die Bedienabsicht wird insbesondere über eine Annäherung eines Betätigungsobjekts an die Anzeigefläche erfasst. Dabei kann über eine Annäherungstrajektorie, die in einem Erfassungsraum vor der Anzeigefläche erfasst wird, das Anzeigefenster ermittelt werden, auf welches sich die Bedienabsicht richtet.

Die Bedienaktion umfasst insbesondere eine Berührung der Anzeigefläche. Um dann einen Wechsel in einen zweiten Anzeigezustand des Fensters hervorzurufen, muss die Anzeigefläche eine berührungsempfindliche Oberfläche aufweisen. Es handelt sich dann um einen Touch-Screen.

Ferner betrifft die Erfindung eine Vorrichtung zum Bereitstellen einer graphischen Benutzerschnittstelle in einem Fahrzeug. Die Vorrichtung umfasst eine Anzeigevorrichtung mit einer Anzeigefläche, auf der eine Anzeige anzeigbar ist, bei der zumindest zwei Anzeigefenster in einem ersten Anzeigezustand anzeigbar sind, wobei in den Anzeigefenstern graphische Objekte anzeigbar sind. Dabei sind die graphischen Objekte für jedes Anzeigefenster einer Kategorie zugeordnet. Weiterhin umfasst die Vorrichtung eine Erfassungseinheit, mittels welcher eine Bedienabsicht eines Nutzers für ein erstes der zwei Anzeigefenster erfassbar ist. Mittels einer Steuervorrichtung ist die Anzeigefläche derart ansteuerbar, dass das erste Anzeigefenster in einen Bedienzustand wechselt, wenn die Bedienabsicht für das erste Anzeigefenster erfasst worden ist. Dabei ist mit der Erfassungseinheit weiterhin eine Bedienaktion des Nutzers erfassbar, wenn sich das erste Anzeigefenster im Bedienzustand befindet, und mit der Steuervorrichtung ist die Anzeigefläche derart ansteuerbar, dass das erste Fenster in einen zweiten Anzeigezustand wechselt, wenn die Bedienaktion erfasst worden ist. Die Vorrichtung ist insbesondere zum Ausführen des erfindungsgemäßen Verfahrens geeignet und weist daher alle Vorteile des Verfahrens auf.

Die erfindungsgemäße Vorrichtung ist insbesondere so ausgestaltet, dass sie die vorstehend beschriebenen Verfahrensschritte teilweise oder vollständig ausführen kann.

In einer Ausgestaltung umfasst die Erfassungseinheit eine Annäherungserfassungseinheit, mittels welcher die Bedienabsicht und/oder die Bedienaktion erfassbar ist. Dazu ist insbesondere vor der Anzeigefläche ein Erfassungsraum ausgebildet. Um die Bedienabsicht zu erfassen, wird dann insbesondere erfasst, ob eine Betätigungsobjekt in den Erfassungsraum eindringt. Um die Bedienaktion zu erfassen, ist von der Annäherungserfassungseinrichtung erfassbar, ob eine Geste innerhalb des Erfassungsraums ausgeführt wird. Die Geste kann insbesondere eine vom Nutzer ausgeführte Wischgeste sein. Das Betätigungsobjekt kann dann die Hand des Nutzers sein.

In einer weiteren Ausgestaltung umfasst die Erfassungseinheit eine berührungsempfindliche Oberfläche, mittels welcher die Bedienabsicht und/oder die Bedienaktion erfassbar ist. Die Anzeigevorrichtung ist also insbesondere ein Touch-Screen. Insbesondere wird die Bedienabsicht mit der Annäherungserfassungseinheit erfasst, während die Bedienaktion auf der berührungsempfindlichen Oberfläche erfasst wird. Dadurch wird gewährleistet, dass Gesten, die aus Versehen im Erfassungsraum ausgeführt werden, nicht zu einer Veränderung auf der Anzeigefläche führen.

In einer anderen Ausgestaltung umfasst die Vorrichtung eine Fahrzeugstarterfassungseinheit, mittels welcher erfassbar ist, ob das Fahrzeug gestartet wurde. Wenn das Fahrzeug gestartet wurde, ist die Anzeigefläche mittels der Steuervorrichtung derart ansteuerbar, dass die Anzeige automatisch anzeigbar ist. Bei der Anzeige handelt es sich also wiederum um die Startbildanzeige (Home-Screen).

Ferner betrifft die vorliegende Erfindung ein Fahrzeug mit einer erfindungsgemäßen Vorrichtung.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figur 2: zeigt ein Beispiel einer Anordnung der erfindungsgemäßen Vorrichtung in einem Fahrzeug,
- Figur 3: zeigt eine Flussdiagramm für ein Ausführungsbeispiel des erfindungsgemäßen Verfahrens,
- Figur 4a: zeigt eine Anzeige eines Home-Screens, wie er zu Beginn des Verfahrens auf der Anzeigefläche erzeugt wird,
- Figur 4b: zeigt ein Anzeigebeispiel, wie es während des Verfahrens erzeugt wird,
- Figuren 4c bis 4e: zeigen Beispiele von Anzeigen, wie sie nach einer Berührung der Anzeigefläche erzeugt werden können, und
- Figur 5: zeigt ein weiteres Anzeigebeispiel, wie es von dem erfindungsgemäßen Verfahren erzeugt werden kann.

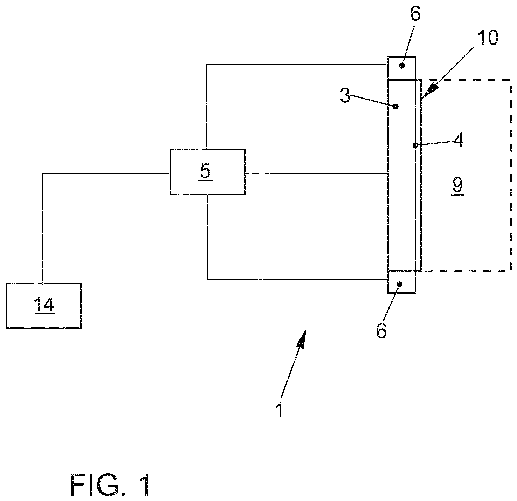

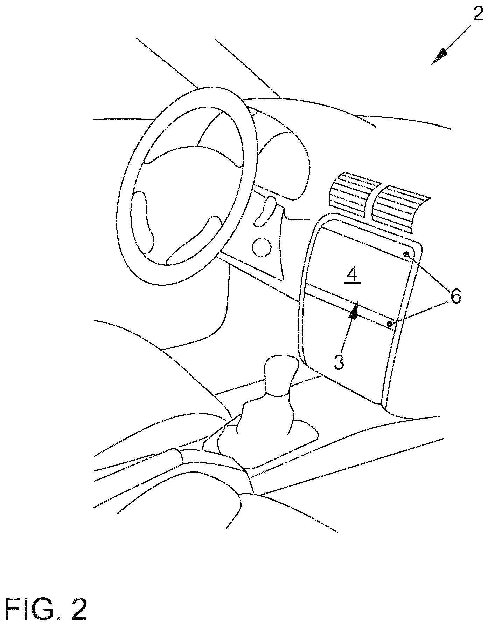

Mit Bezug zu den Figuren 1 und 2 wird ein Ausführungsbeispiel der erfindungsgemäßen Vorrichtung 1 erläutert:
Die Vorrichtung 1 dient der Bereitstellung einer Benutzerschnittstelle in einem Fahrzeug 2. Sie umfasst eine Anzeigevorrichtung 3 mit einer Anzeigefläche 4. Die Anzeigefläche 4 kann von einem Display beliebiger Bauart bereitgestellt werden. Die Anzeigevorrichtung 3 ist mit einer Steuervorrichtung 5 verbunden. Die Steuervorrichtung 5 erzeugt Graphikdaten, die mittels der Anzeigefläche 4 im Innenraum des Fahrzeugs 2 für die Fahrzeuginsassen sichtbar wiedergegeben werden.

Die Vorrichtung 1 umfasst weiterhin eine Fahrzeugstarterfassungseinheit 14, mittels welcher erfasst werden kann, wenn das Fahrzeug 2 gestartet wurde. Die Fahrzeugstarterfassungseinheit 14 ist mit der Steuervorrichtung 5 gekoppelt. Die Anzeigefläche wird von der Steuervorrichtung 5 automatisch angesteuert, um die Graphikdaten zu erzeugen, wenn erfasst worden ist, dass das Fahrzeug 2 gestartet wird. Bei der auf der Anzeigefläche 4 angezeigten Anzeige handelt es sich dann um eine Startbildanzeige. Die Startbildanzeige kann vom Nutzer selbst nach seinen persönlichen Vorlieben konfiguriert werden. Die Startbildanzeige wird dann solange angezeigt, bis eine Bedienabsicht oder eine Bedienaktion erfasst wurde.

Des Weiteren ist eine Annäherungserfassungseinrichtung 6 vorgesehen, mit der eine Annäherung eines Betätigungsobjekts an die Anzeigefläche 4 erfassbar ist. Dazu ist vor der Anzeigefläche 4 ein Erfassungsraum 9 ausgebildet. Der Nutzer kann weiterhin im Erfassungsraum 9 Gesten ausführen um die Anzeige auf der Anzeigefläche 4 zu steuern.

Weiterhin ist auf der Anzeigefläche 4 eine berührungsempfindliche Oberfläche 10 angeordnet. Die Anzeigefläche 4 stellt also einen sogenannten Touch-Screen bereit. Auf der berührungsempfindlichen Oberfläche 10 kann der Nutzer Bedienaktionen ausführen, mittels welcher er ebenso die Anzeige auf der Anzeigefläche 4 steuern kann.

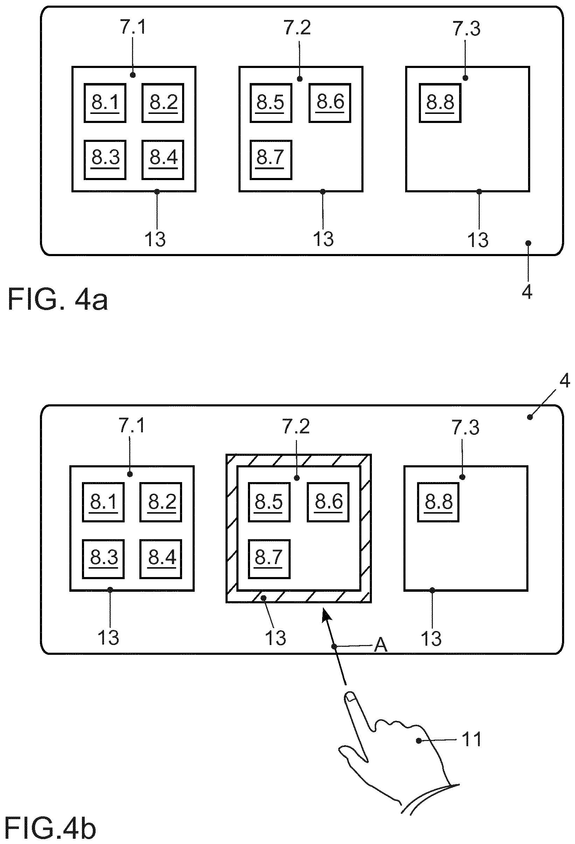

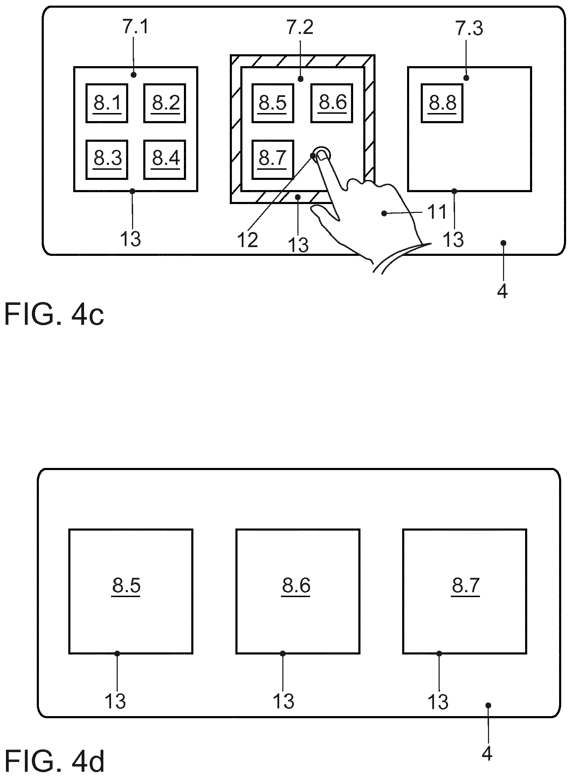

Mit Bezug zu Figur 4a wird eine Startbildanzeige auf der Anzeigefläche 4 erläutert, wie sie von der Steuervorrichtung 5 erzeugt werden kann.

Die Startbildanzeige entspricht dem sogenannten Home-Screen, der angezeigt wird, wenn das Fahrzeug 2 und somit die Anzeigevorrichtung 3 gestartet wird.

Der Home-Screen kann dabei insbesondere vom Nutzer selbst konfiguriert werden. Dadurch kann der Nutzer selbst bestimmen, welche Anwendungen auf der Anzeigefläche 4 angezeigt werden sollen, wenn das Fahrzeug 2 und somit die Anzeigevorrichtung 3 gestartet werden. Die Konfiguration kann dabei insbesondere über Drag und Drop Aktionen vorgenommen werden.

Auf dem Home-Screen werden im vorliegenden Beispiel drei Fenster 7.1 bis 7.3 in einem ersten Anzeigezustand angezeigt. Im Fenster 7.1 werden beispielweise vier graphische Objekte 8.1 bis 8.4, welche sogenannte Widget-Objekte sind, angezeigt. Im Fenster 7.2 werden drei Widget-Objekte 8.5 bis 8.7 angezeigt und im Fenster 7.3 wird ein Widget-Objekt 8.8 angezeigt. Dabei beziehen sich die Widget-Objekte 8.1 bis 8.8 in jedem Fenster jeweils auf eine Kategorie. So zeigen die Widget-Objekte 8.1 bis 8.4 Navigationsinformationen an. Die Widget-Objekte 8.5 bis 8.7 zeigen Kommunikationsinformationen an. Das Widget-Objekt 8.8 zeigt Informationen zum Wetter an.

Widget-Objekte sind dabei insbesondere graphische Objekte, welche auf der Anzeigefläche 4 dargestellt werden und welche einer Anwendung zugeordnet sind, die z. B. von einer Fahrzeugeinrichtung ausgeführt werden. Ein Widget-Objekt kann insbesondere in einem kleinen Bereich der Anzeigefläche 4 Informationen einer Fahrzeugeinrichtung anzeigen, die laufend aktualisiert werden.

Die Widget-Objekte 8.1 bis 8.4 im Anzeigefenster 7.1 sind dabei insbesondere der Kategorie Navigation zugeordnet. Sie zeigen Informationen zum Routenverlauf, zum Straßenzustand, zum Verkehrszustand und Informationen zu zuletzt eingegebenen Zielen an.

Die Widget-Objekte 8.5 bis 8.7 im Anzeigefenster 7.2 sind der Kategorie Kommunikation zugeordnet. Dabei zeigt das Widget-Objekt 8.5 Informationen zu einem Posteingang für Emails. Das Widget-Objekt 8.6 zeigt empfangene Kurzmitteilungen an. Das Widget-Objekt 8.7 zeigt Anrufe an. Geht beispielsweise gerade ein Anruf ein, so zeigt das Widget-Objekt 8.7 ein Bild des Anrufers an.

Das Widget-Objekt 8.8 im Anzeigefenster 7.3 ist der Kategorie Wetter zugeordnet. Dabei enthält das Widget-Objekt 8.8 Informationen zur Außentemperatur.

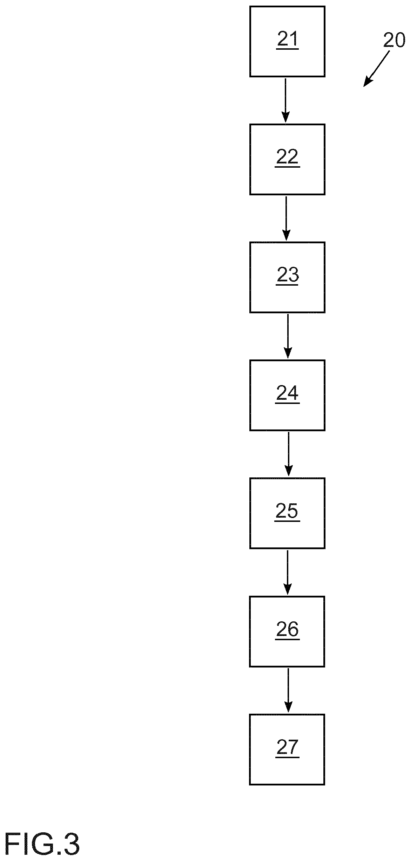

Mit Bezug zu den Figuren 3 und 4a bis 4d wird ein Ausführungsbeispiel des erfindungsgemäßen Verfahrens 20 erläutert. Figur 4a zeigt dabei die im Vorgang erläuterte Startbildanzeige an:
Zunächst startet der Nutzer das Fahrzeug 2. Dies wird in Schritt 21 des Verfahrens von der Fahrzeugstarterfassungseinheit 14 erfasst.

In Schritt 22 wird die Anzeigefläche 4 derart angesteuert, dass die Startbildanzeige gemäß Figur 4a auf der Anzeigefläche 4 erzeugt wird.

In Schritt 23 wird eine Bedienabsicht des Nutzers dadurch erkannt, dass eine Annäherung eines Betätigungsobjekts 11 an die Anzeigefläche 4 erfasst wird. Das Betätigungsobjekt 11 ist dabei beispielsweise die Hand des Nutzers.

In Schritt 24 wird über eine Annäherungstrajektorie A an die Anzeigefläche 4 eines der Anzeigefenster 7.1 bis 7.3 ermittelt, welchem die Bedienabsicht gilt. Im vorliegenden Beispiel wird das Anzeigefenster 7.2 als das Anzeigefenster ermittelt, welchem die Bedienabsicht gilt.

In Schritt 25 wird die Anzeigefläche 4 derart angesteuert, dass das Fenster 7.2 hervorgehoben dargestellt wird. Dabei kann beispielsweise die Umrandung 13 des Fenster 7.2 in einer anderen Farbe dargestellt werden. Alternativ kann die Umrandung 13 auch dicker dargestellt werden, als die Umrandungen 13 der Anzeigefenster 7.1 und 7.3. Dadurch wird dem Nutzer angezeigt, auf welches Anzeigefenster 7.1 bis 7.3 sich seine Bedienabsicht richtet. Sollte der Nutzer nicht beabsichtigen, dass ermittelte Anzeigefenster 7.2 auszuwählen, kann er sich, bevor er eine Bedienaktion tätigt, für eines der anderen Anzeigefenster 7.1 oder 7.3 entscheiden. Weiterhin wird in Schritt 25 das Anzeigefenster 7.2 von dem ersten Anzeigezustand in einen Bedienzustand versetzt. Dadurch lässt sich das Anzeigefenster 7.2 nun durch Bedienaktionen bedienen.

Der Nutzer berührt das Anzeigefenster 7.2 auf der Anzeigefläche 4 mit berührungsempfindlicher Oberfläche 10 an einem Berührungspunkt 12. Dies wird in Schritt 26 als Bedienaktion erkannt. Durch die Bedienaktion wird das Fenster 7.2 in einen zweiten Anzeigezustand versetzt.

Um das Anzeigefenster 7.2 in einen zweiten Anzeigezustand zu versetzen, wird die Anzeigefläche 4 in Schritt 27 des Verfahrens derart angesteuert, dass die Anzeigefenster 7.1 und 7.3 sowie deren Widget-Objekte 8.1 bis 8.4 nicht mehr angezeigt werden. Stattdessen werden die Widget-Objekte 8.5 bis 8.7, die im ersten Anzeigezustand des Anzeigefensters 7.2 in zwei untereinander angeordneten Reihen angezeigt wurden, in einer Reihe nebeneinander vergrößert dargestellt. Durch die neue Anordnung und gleichzeitige Vergrößerung der Widget-Objekte 8.5 bis 8.7 wird die Anzeigefläche 4 optimal ausgenutzt. Die von den Widget-Objekten 8.5 bis 8.7 gezeigte Information kann vom Nutzer besser aufgenommen werden und die mit den Widget-Objekten 8.5 bis 8.7 verknüpften Funktionen des Fahrzeugs nun auch besser bedient werden. Die neue Anordnung der Widget-Objekte 8.5 bis 8.7 auf der Anzeigefläche 4 ist in Figur 4d gezeigt.

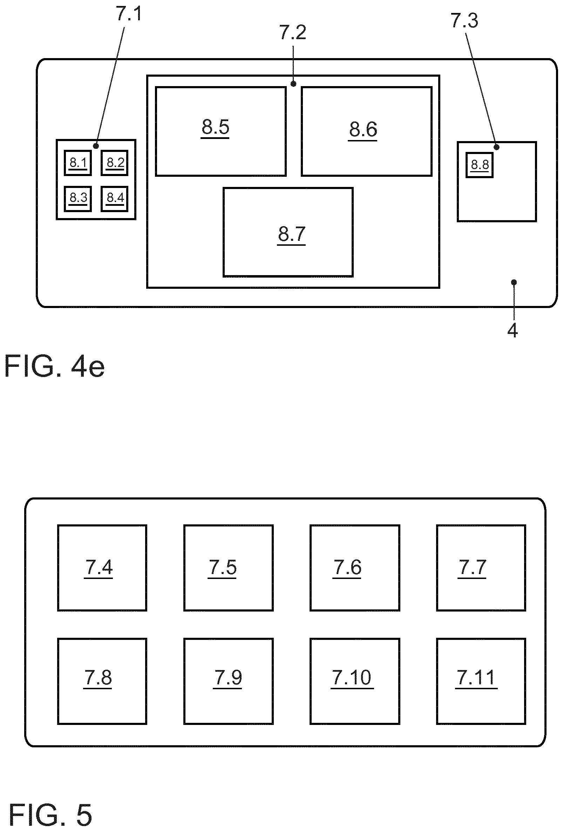

Alternativ kann in Schritt 27 die Anzeigefläche 4 auch derart angesteuert werden, dass das Fenster 7.2 sowie die darin dargestellten Widget-Objekte 8.5 bis 8.7 vergrößert dargestellt werden, während die Fenster 7.1 und 7.3 sowie die darin dargestellten Widget-Objekte 8.1 bis 8.4 und 8.8 verkleinert dargestellt werden. Es wechseln also auch die Anzeigefenster 7.1 und 7.3 in einen zweiten Anzeigezustand. Auch dadurch wird eine verbesserte Sichtbarkeit und dadurch eine bessere Bedienbarkeit der Widget-Objekte 8.5 bis 8.7 ermöglicht. Dies ist in Figur 4e gezeigt. Alternativ kann das Anzeigefenster 7.2 im zweiten Anzeigezustand vergrößert werden und dabei die Anzeigefenster 7.1 und 7.3 zumindest teilweise überdecken, während die Anzeigefenster 7.1 und 7.3 ihre Größe beibehalten. Alternativ können die Anzeigefenster 7.1 und 7.3 auch gleichzeitig von dem Anzeigefenster 7.2 überdeckt werden und verkleinert dargestellt werden.

In einer alternativen Ausführungsform sind die graphischen Objekte wiederum Anzeigefenster 7.4 bis 7.10 der gleichen Art wie die Anzeigefenster 7.1 bis 7.3. Diese Anzeigefenster 7.4 bis 7.10 können dann durch ein Auswählen des Fensters 7.2 zugänglich gemacht werden. Das Verfahren stellt dann ein Verfahren bereit, mit dem der Nutzer durch ein Menü mit mehreren Hierarchieebenen navigieren kann. Dies ist Figur 5 dargestellt.

In einem weiteren Ausführungsbeispiel des erfindungsgemäßen Verfahrens kann das Fenster 7.2 dadurch hervorgehoben dargestellt werden, dass es wie in Figur 4e gezeigt, vergrößert dargestellt werden. Eine Bedienaktion kann dann zu einer Anzeige gemäß der Figuren 4d oder 5 führen.

Die unterschiedlichen Anzeigealternativen können beliebig in dem Verfahren kombiniert werden.

Weiterhin kann die Bedienaktion auch durch Wischgesten in dem Erfassungsraum 9 vor der Anzeigefläche 4 ausgeführt werden. Dann ist eine berührungsempfindliche Oberfläche 10 nicht notwendig, um dass Verfahren auszuführen. Es kann aber auch die Bedienabsicht durch Berührungen der berührungsempfindlichen Oberfläche 10 erfasst werden.

### Bezugszeichenliste

- 1: Vorrichtung
- 2: Fahrzeug
- 3: Anzeigevorrichtung
- 4: Anzeigefläche
- 5: Steuervorrichtung
- 6: Annäherungserfassungseinheit
- 7.1 - 7.3: Anzeigefenster
- 7.4 - 7.10: Anzeigefenster
- 8.1 - 8.8: graphische Objekte; Widget-Objekte
- 9: Erfassungsraum
- 10: berührungsempfindliche Oberfläche
- 11: Betätigungsobjekt; Hand des Nutzers
- 12: Berührungspunkt
- 13: Umrandung der Anzeigefenster
- 14: Fahrzeugstarterfassungseinheit
- 20: Verfahren
- 21 - 25: Verfahrensschritte
- A: Annäherungstrajektorie

## Patentansprüche

1. Verfahren zum Bereitstellen einer graphischen Benutzerschnittstelle in einem Fahrzeug (2), bei dem
auf einer Anzeigefläche (4) einer Anzeigevorrichtung (3) eine Anzeige angezeigt wird, bei der zumindest zwei Anzeigefenster (7.1 - 7.3) in einem ersten Anzeigezustand angezeigt werden, wobei in den Anzeigefenstern (7.1 - 7.3) graphische Objekte (8.1 - 8.8) angezeigt werden, wobei die graphischen Objekte (8.1 - 8.8) für jedes Anzeigefenster (7.1 - 7.3) einer Kategorie zugeordnet sind,
eine Bedienabsicht eines Nutzers für ein erstes Anzeigefenster (7.2) erfasst wird, wobei die Bedienabsicht über eine Annäherung eines Bedienobjektes an die Anzeigefläche erfasst wird, und
wenn die Bedienabsicht erfasst worden ist, das erste Anzeigefenster (7.2) in einen Bedienzustand wechselt,
eine Bedienaktion des Nutzers erfasst wird, wenn sich das erste Anzeigefenster (7.2) im Bedienzustand befindet, und,
wenn die Bedienaktion erfasst worden ist, das erste Anzeigefenster (7.2) in einen zweiten Anzeigezustand wechselt,
wobei das erste Anzeigefenster (7.2) im ersten Anzeigezustand in der gleichen Größe und Farbe dargestellt wird, wie ein zweites der zwei Anzeigefenster (7.1, 7.3), und
das erste Anzeigefenster (7.1) im Bedienzustand im Vergleich zum zweiten Anzeigefenster (7.1, 7.3) hervorgehoben dargestellt wird, und wobei
das erste Anzeigefenster (7.2) in dem zweiten Anzeigezustand vergrößert dargestellt wird, wobei auch die graphischen Objekte (8.5 - 8.7) in dem ersten Anzeigefenster (7.2) vergrößert dargestellt werden, und das zweite Anzeigefenster (7.1, 7.3) verkleinert dargestellt wird.

2. Verfahren nach Anspruch 1,
wobei erfasst wird, ob das Fahrzeug (2) gestartet wird, und
wenn erfasst worden ist, dass das Fahrzeug gestartet wurde, die Anzeige automatisch angezeigt wird.

3. Verfahren nach Anspruch 1 oder 2,
wobei die Anzeigefenster (7.1 - 7.3) eine Umrandung (13) aufweisen und
im Bedienzustand das erste Anzeigefenster (7.2) dadurch hervorgehoben dargestellt wird, dass für die Umrandung (13) des ersten Anzeigefensters (7.2) eine andere Farbe und/oder eine andere Dicke als für die Umrandung (13) des zweiten Anzeigefensters (7.1, 7.3) auf der Anzeigefläche (4) erzeugt wird.

4. Verfahren nach einem der vorhergehenden Ansprüche,
wobei das erste Anzeigefenster (7.2) im Bedienzustand dadurch hervorgehoben dargestellt wird, dass es im Vergleich zum zweiten Anzeigefenster (7.1, 7.3) vergrößert dargestellt wird und/oder in einer anderen Farbe dargestellt wird.

5. Verfahren nach einem der vorhergehenden Ansprüche,
wobei die Kategorien, welchen die graphischen Objekte (8.1 - 8.8) in den Anzeigefenstern (7.1 - 7.3) zugeordnet sind, Navigationsinformationen, Kommunikationsinformationen, Klimainformationen, Medienwiedergabeinformationen und/oder Wetterinformationen umfassen.

6. Verfahren nach einem der vorhergehenden Ansprüche,
wobei die Anzeigefenster (7.1 - 7.3) und/oder die graphischen Objekte (8.1 - 8.8) Widget-Objekte umfassen.

7. Verfahren nach einem der vorhergehenden Ansprüche,
wobei die Bedienaktion eine Berührung der Anzeigefläche (4) umfasst.

8. Vorrichtung (1) zum Bereitstellen einer graphischen Benutzerschnittstelle in einem Fahrzeug (2), mit
einer Anzeigevorrichtung (3) mit einer Anzeigefläche (4), auf der eine Anzeige anzeigbar ist, bei der zumindest zwei Anzeigefenster (7.1 - 7.3) in einem ersten Anzeigezustand anzeigbar sind, wobei in den Anzeigefenstern (7.1 - 7.3) graphische Objekte (8.1 - 8.8) anzeigbar sind, wobei die graphischen Objekte (8.1 - 8.8) für jedes Anzeigefenster (7.1 - 7.3) einer Kategorie zugeordnet sind,
einer Erfassungseinheit (6,10), umfassend eine Annäherungseinheit (6), mittels welcher eine Bedienabsicht eines Nutzers für ein erstes der zwei Anzeigefenster (7.2) erfassbar ist, und
einer Steuervorrichtung (5), mittels welcher die Anzeigefläche (4) derart ansteuerbar ist, dass das erste Anzeigefenster (7.2) in einen Bedienzustand wechselt, wenn die Bedienabsicht für das erste Anzeigefenster (7.2) erfasst worden ist,
wobei mit der Erfassungseinheit (6) eine Bedienaktion des Nutzers erfassbar ist, wenn sich das erste Anzeigefenster (7.2) im Bedienzustand befindet, und mit der Steuervorrichtung (5) die Anzeigefläche (4) derart ansteuerbar ist, dass das erste Fenster (7.2) in einen zweiten Anzeigezustand wechselt, wenn die Bedienaktion erfasst worden ist, w
obei die Steuervorrichtung so eingerichtet ist, dass
das erste Anzeigefenster (7.2) im ersten Anzeigezustand in der gleichen Größe und Farbe darstellbar ist, wie ein zweites der zwei Anzeigefenster (7.1, 7.3), und
das erste Anzeigefenster (7.1) im Bedienzustand im Vergleich zum zweiten Anzeigefenster (7.1, 7.3) hervorgehoben darstellbar ist, und wobei
das erste Anzeigefenster (7.2) in dem zweiten Anzeigezustand vergrößert darstellbar ist, wobei auch die graphischen Objekte (8.5 - 8.7) in dem ersten Anzeigefenster (7.2) vergrößert darstellbar sind, und das zweite Anzeigefenster (7.1, 7.3) verkleinert darstellbar ist.

9. Vorrichtung (1) nach Anspruch 8,
wobei die Vorrichtung (1) eine Fahrzeugstarterfassungseinheit (14) umfasst, mittels welcher erfassbar ist, ob das Fahrzeug (2) gestartet wurde, und,
wenn das Fahrzeug (2) gestartet wurde, die Anzeigefläche (4) mittels der Steuervorrichtung (5) derart ansteuerbar ist, dass die Anzeige automatisch anzeigbar ist.

10. Fahrzeug (2) mit einer Vorrichtung (1) nach einem der Ansprüche 8 bis 9.

## Claims

1. Method for providing a graphical user interface in a vehicle (2), in which
a display panel (4) of a display apparatus (3) is used to display a display in which at least two display windows (7.1-7.3) are displayed in a first display state, wherein the display windows (7.1-7.3) are used to display graphical objects (8.1-8.8), wherein the graphical objects (8.1-8.8) for each display window (7.1-7.3) are associated with a category,
an operator control intention of a user for a first display window (7.2) is detected, wherein the operator control intention is detected by means of an approach by an operator control object to the display panel, and,
when the operator control intention has been detected, the first display window (7.2) changes to an operator control state,
an operator control action by the user is detected when the first display window (7.2) is in the operator control state, and,
when the operator control action has been detected, the first display window (7.2) changes to a second display state,
wherein
the first display window (7.2) in the first display state is depicted in the same size and colour as a second of the two display windows (7.1, 7.3), and the first display window (7.1) in the operator control state is depicted in highlighted fashion in comparison with the second display window (7.1, 7.3), and wherein
the first display window (7.2) in the second display state is depicted in enlarged fashion, with the graphical objects (8.5-8.7) in the first display window (7.2) also being depicted in enlarged fashion, and the second display window (7.1, 7.3) is depicted in reduced fashion.

2. Method according to Claim 1,
wherein
it is detected whether the vehicle (2) is started, and,
when it has been detected that the vehicle has been started, the display is displayed automatically.

3. Method according to Claim 1 or 2,
wherein
the display windows (7.1-7.3) have a border (13) and in the operator control state the first display window (7.2) is depicted in highlighted fashion by virtue of a different colour and/or a different thickness being produced for the border (13) of the first display window (7.2) than for the border (13) of the second display window (7.1, 7.3) on the display panel (4).

4. Method according to one of the preceding claims, wherein
the first display window (7.2) in the operator control state is depicted in highlighted fashion by virtue of it being depicted in enlarged fashion and/or being depicted in a different colour in comparison with the second display window (7.1, 7.3) .

5. Method according to one of the preceding claims
wherein
the categories with which the graphical objects (8.1-8.8) in the display windows (7.1-7.3) are associated comprise navigation information, communication information, air conditioning information, media reproduction information and/or weather information.

6. Method according to one of the preceding claims,
wherein
the display windows (7.1-7.3) and/or the graphical objects (8.1-8.8) comprise widget objects.

7. Method according to one of the preceding claims,
wherein
the operator control action comprises a touch of the display panel (4).

8. Apparatus (1) for providing a graphical user interface in a vehicle (2), having
a display apparatus (3) having a display panel (4) that can be used to display a display in which at least two display windows (7.1-7.3) are displayable in a first display state, wherein the display windows (7.1-7.3) can be used to display graphical objects (8.1-8.8), wherein the graphical objects (8.1-8.8) for each display window (7.1-7.3) are associated with a category,
a detection unit (6, 10), comprising a proximity unit (6) that can be used to detect an operator control intention of a user for a first of the two display windows (7.2), and
a control apparatus (5) that can be used to actuate the display panel (4) such that the first display window (7.2) changes to an operator control state when the operator control intention for the first display window (7.2) has been detected,
wherein the detection unit (6) can be used to detect an operator control action by the user when the first display window (7.2) is in the operator control state, and the control apparatus (5) can be used to actuate the display panel (4) such that the first window (7.2) changes to a second display state when the operator control action has been detected, wherein
the control apparatus is set up such that
the first display window (7.2) in the first display state is depictable in the same size and colour as a second of the two display windows (7.1, 7.3), and the first display window (7.1) in the operator control state is depictable in highlighted fashion in comparison with the second display window (7.1, 7.3), and wherein
the first display window (7.2) in the second display state is depictable in enlarged fashion, with the graphical objects (8.5-8.7) in the first display window (7.2) also being depictable in enlarged fashion, and the second display window (7.1, 7.3) is depictable in reduced fashion.

9. Apparatus (1) according to Claim 8,
wherein
the apparatus (1) comprises a vehicle start detection unit (14) that can be used to detect whether the vehicle (2) has been started, and,
when the vehicle (2) has been started, the display panel (4) is actuatable by means of the control apparatus (5) such that the display is displayable automatically.

10. Vehicle (2) having an apparatus (1) according to either of Claims 8 and 9.

## Revendications

1. Procédé de mise à disposition d'une interface utilisateur graphique dans un véhicule (2), dans lequel s'affiche, sur une surface d'affichage (4) d'un dispositif d'affichage (3), un écran dans lequel au moins deux fenêtres d'affichage (7.1 - 7.3) sont affichées dans un premier état d'affichage, des objets graphiques (8.1 - 8.8) étant affichés dans les fenêtres d'affichage (7.1 - 7.3), les objets graphiques (8.1 - 8.8) étant affectés à une catégorie pour chaque fenêtre d'affichage (7.1 - 7.3),
une intention de manoeuvre d'un utilisateur pour une première fenêtre d'affichage (7.2) étant détectée, l'intention de manoeuvre étant détectée par l'intermédiaire d'une approche d'un objet de manoeuvre vers la surface d'affichage, et,
lorsque l'intention de manoeuvre a été détectée, la première fenêtre d'affichage (7.2) passe dans un état de manoeuvre,
une action de manoeuvre de l'utilisateur est détectée lorsque la première fenêtre d'affichage (7.2) se trouve en état de manoeuvre, et,
lorsque l'intention de manoeuvre a été détectée, la première fenêtre d'affichage (7.2) passe dans un second état d'affichage,
la première fenêtre d'affichage (7.2) étant, dans un premier état d'affichage, représentée dans la même taille et couleur qu'une seconde des deux fenêtres d'affichage (7.1, 7.3), et
la première fenêtre d'affichage (7.1) étant, en état de manoeuvre, représentée en la mettant en avant comparativement à la seconde fenêtre d'affichage (7.1, 7.3), et
la première fenêtre d'affichage (7.2) étant représentée agrandie dans le second état d'affichage, les objets graphiques (8.5 - 8.7) étant aussi représentés agrandis dans la première fenêtre d'affichage (7.2), et la seconde fenêtre d'affichage (7.1, 7.3) étant représentée réduite.

2. Procédé selon la revendication 1, dans lequel il est détecté si le véhicule (2) démarre et,
s'il a été détecté que le véhicule a démarré, l'écran est automatiquement affiché.

3. Procédé selon la revendication 1 ou 2, dans lequel les fenêtres d'affichage (7.1 - 7.3) présentent un encadrement (13) et,
en état de manoeuvre, la première fenêtre d'affichage (7.2) est mise en avant par le fait que, pour l'encadrement (13) de la première fenêtre d'affichage (7.2), une couleur et/ou une épaisseur autre que celle de l'encadrement (13) de la seconde fenêtre d'affichage (7.1, 7.3) est générée sur la surface d'affichage (4).

4. Procédé selon une des revendications précédentes, dans lequel la première fenêtre d'affichage (7.2), en état de manoeuvre, est mise en avant par le fait que, comparativement à la seconde fenêtre d'affichage (7.1, 7.3), elle est représentée agrandie et/ou représentée dans une autre couleur.

5. Procédé selon une des revendications précédentes, dans lequel les catégories auxquelles les objets graphiques (8.1 - 8.8) sont affectés dans les fenêtres d'affichage (7.1 - 7.3) comprennent des informations de navigation, des informations de communication, des informations climatiques, des informations de restitution médiatique et/ou des informations météorologiques.

6. Procédé selon une des revendications précédentes, dans lequel les fenêtres d'affichage (7.1 - 7.3) et/ou les objets graphiques (8.1 - 8.8) comprennent des objets widgets.

7. Procédé selon une des revendications précédentes, dans lequel l'action de manoeuvre comprend le fait de toucher la surface d'affichage (4).

8. Dispositif (1) de mise à disposition d'une interface utilisateur graphique dans un véhicule (2), comportant
un dispositif d'affichage (3) doté d'une surface d'affichage (4) sur laquelle il est possible d'afficher un écran dans lequel au moins deux fenêtres d'affichage (7.1 - 7.3) peuvent être affichées dans un premier état d'affichage, des objets graphiques (8.1 - 8.8) pouvant être affichés dans les fenêtres d'affichage (7.1 - 7.3), les objets graphiques (8.1 - 8.8) étant affectés à une catégorie pour chaque fenêtre d'affichage (7.1 - 7.3),
une unité de détection (6, 10) comprenant une unité d'approche (6) au moyen de laquelle une intention de manoeuvre d'un utilisateur pour une des deux fenêtres d'affichage (7.2) est détectable, et
un dispositif de commande (5) au moyen duquel la surface d'affichage (4) peut être commandée de manière à ce que la première fenêtre d'affichage (7.2) passe dans un état de manoeuvre lorsque l'intention de manoeuvre pour la première fenêtre d'affichage (7.2) a été détectée,
sachant que, à l'aide de l'unité de détection (6), une action de manoeuvre de l'utilisateur est détectable lorsque la première fenêtre d'affichage (7.2) se trouve en état de manoeuvre et que, grâce au dispositif de commande (5), la surface d'affichage (4) peut être commandée de manière à ce que la première fenêtre (7.2) passe dans un second état d'affichage lorsque l'action de manoeuvre a été détectée,
le dispositif de commande étant conçu de manière à ce que la première fenêtre d'affichage (7.2) puisse être représentée, dans le premier état d'affichage, dans la même taille et couleur qu'une seconde des deux fenêtres d'affichage (7.1, 7.3), et
la première fenêtre d'affichage (7.1) pouvant, en état de manoeuvre, être représentée en la mettant en avant comparativement à la seconde fenêtre d'affichage (7.1, 7.3), et
la première fenêtre d'affichage (7.2) pouvant, dans le second état d'affichage, être représentée agrandie, les objets graphiques (8.5 - 8.7) pouvant aussi être représentés agrandis dans la première fenêtre d'affichage (7.2), et la seconde fenêtre d'affichage (7.1, 7.3) pouvant être représentée réduite.

9. Dispositif (1) selon la revendication 8, dans lequel le dispositif (1) comprend une unité de détection de démarrage de véhicule (14) au moyen de laquelle on peut détecter si le véhicule (2) a démarré, et,
si le véhicule (2) a démarré, la surface d'affichage (4) peut être commandée au moyen du dispositif de commande (5) de manière à ce que l'écran puisse être affiché automatiquement.

10. Véhicule (2) comportant un dispositif (1) selon une des revendications 8 à 9.
